# FASCICULE DE BREVET EUROPEEN

(11) **EP 0 202 132 B1**
(45) Date de publication et mention de la délivrance du brevet: **26.09.1990**
(21) Numéro de dépôt: 86400669.7
(22) Date de dépôt: 27.03.1986
(51) Int. Cl.: G01S 7/298

(54) **Procédé d'insertion de médaillons dans l'image fournie par un transformateur numérique d'images, et transformateur numérique d'images mettant en oeuvre ce procédé**
Verfahren zum Einfügen von Medaillons in das durch einen numerischen Bildwandler gelieferte Bild und numerischer Bildwandler zur Durchführung eines solchen Verfahrens
Method for inserting medallions into the image delivered by a digital image converter, and digital image converter for carrying out such a method

(30) Priorité: 02.04.1985 FR 8505013
(43) Date de publication de la demande: 20.11.1986
(73) Titulaire: THOMSON-CSF, 75008 Paris (FR)
(72) Inventeur: Andrieu, Jean-Pierre, F-75008 Paris (FR); Henri, Jean-Claude, F-75008 Paris (FR)
(74) Mandataire: Benoit, Monique

(56) Documents cités:
- FR-A- 2 375 774
- US-A- 3 976 982
- US-A- 4 282 550
- PHILIPS TELECOMMUNICATION REVIEW, vol. 37, no. 2, mai 1979, pages 64-70, Hilversum, NL; J. GIETEMA: "A digital scan converter for radar pictures"

## Description

La présente invention concerne un transformateur numérique d'images et elle a plus particulièrement pour objet un procédé d'insertion de médaillons dans l'image fournie par un tel transformateur, ainsi que le transformateur pour la mise en oeuvre de ce procédé.

On rappelle qu'un transformateur numérique d'images (ou T.D.L) a pour rôle essentiel de transformer une image fournie en coordonnées polaires et à renouvellement relativement lent en une image du type télévision, lumineuse, permettant son exploitation en ambiance éclairée. Cette image à renouvellement lent est généralement une image radar mais ce peut être également une image en provenance d'un sonar, d'un senseur infra-rouge, d'un système d'échographie par exemple, qu'on veut visualiser sur un écran fonctionnant en mode télévision.

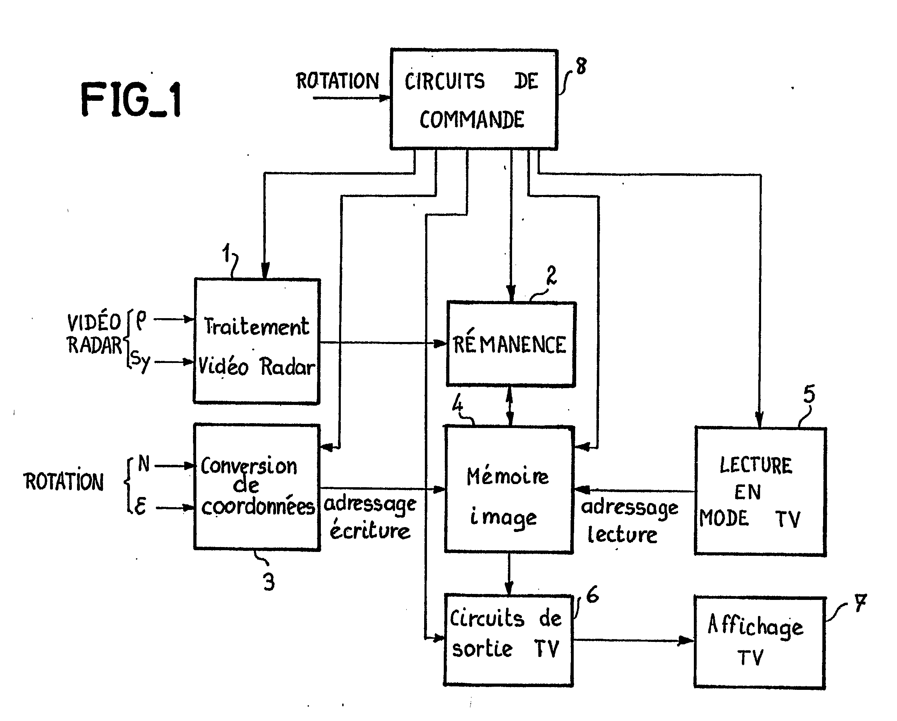

La figure 1 représente le schéma synoptique d'un T.D.I. classique dans le cas plus particulier d'un radar.

Il comporte :
- un moniteur de télévision 7, sur lequel les informations radar sont affichées ;
- une mémoire 4, appelée mémoire image, contenant sous forme numérique l'image qui sera affichée sur le moniteur 7 ; la capacité de la mémoire 4 est adaptée au standard de télévision utilisé, c'est-à-dire qu'elle doit comporter autant de cases mémoire que l'image affichée sur le moniteur de télévision comporte de points ; en outre, la luminance de chaque point est codée à l'aide d'un certain nombre de bits, par exemple 3 bits autorisant 8 niveaux de luminosité pour chaque point ; les phases de lecture du contenu de la mémoire 4, à destination du moniteur de télévision 7, et d'écriture dans la mémoire de l'information radar fournie par un ensemble 2, sont asynchrones : la lecture est prioritaire et, pendant une phase de lecture, l'écriture est arrêtée ;
- un ensemble 1 de circuits de traitement des signaux de vidéo radar reçus par le T.D.I. ; on rappelle que les signaux de vidéo sont constitués, d'une part, par un signal de synchronisation (Sy) indiquant qu'une impulsion a été émise par le radar et, d'autre part, par la vidéo (p) proprement dite, constituée par toutes les réponses (échos) à cette impulsion ; cet ensemble 1 assure notamment la conversion en numérique du signal vidéo incident (analogique), le traitement de ce signal, dont le détail est variable selon le type du radar, et la mémorisation de l'information vidéo correspondant à chaque impulsion radar, appelée radiale ;
- un ensemble 3 de circuits de conversion de coordonnées, qui est rendu nécessaire par le fait que l'information radar est généralement fournie en coordonnées polaires alors qu'elle doit être inscrite sur l'écran de télévision (7) en coordonnées cartésiennes ; à cet effet, l'ensemble 3 reçoit les signaux représentatifs de la rotation de l'antenne du radar, qui ont pour rôle d'indiquer à tout moment la position angulaire du faisceau du radar (de l'antenne du radar) par rapport à une direction de référence, en général le Nord ; les signaux de rotation sont constitués d'une part par un signal Nord (N), qui est un top fourni à chaque passage du faisceau au Nord et, d'autre part, par un signal d'incrément d'angle (e) indiquant que le faisceau a tourné d'un nème de tour par rapport à l'incrément précédent, si n incréments correspondent à 3600 ; l'ensemble 3 assure donc l'adressage en écriture de la mémoire image 4, l'ensemble de traitement 1 fournissant, par l'intermédiaire d'un ensemble 2, l'information à inscrire en mémoire image 4, en synchronisme avec l'adressage ;
- un ensemble 5 de circuits de lecture en mode télévision, assurant l'adressage en lecture de la mémoire image 4 ;
- un ensemble 6 de circuits de sortie en mode télévision, qui reçoit l'information contenue dans la mémoire image 4 et telle qu'adressée par l'ensemble 5, en assure la conversion numérique-analogique pour engendrer le signal vidéo télévision destiné au moniteur 7, ainsi que la génération des signaux de synchronisation de télévision classiques ;
- un ensemble 2 de circuits dit de rémanence artificielle, qui a pour rôle de créer pour les informations numériques mémorisées dans la mémoire 4, pour lesquelles il n'existe pas de modification due au vieillissement, un effet de rémanence comparable à celui qui est produit sur un tube rémanant où la brillance d'un point commence à décroître dès qu'il est inscrit ;
- un ensemble 8 de circuits de commande, réalisé par exemple à l'aide d'un microprocesseur, recevant à la fois les signaux de vidéo radar et les signaux de rotation ; il assure la commande et la synchronisation de tous les circuits précédents, en dehors du moniteur 7.

Il apparaît ainsi que, après transformation du standard de balayage (de polaire en cartésien), la mémoire image 4 contient l'image telle qu'elle sera affichée sur le moniteur de télévision 7, cette image étant appelée image de base.

Le problème qui se pose souvent à l'opérateur est de vouloir agrandir une ou plusieurs zones de cette image de base, là où un détail important nécessite d'être examiné ; ces zones agrandies sont appelées "médaillons".

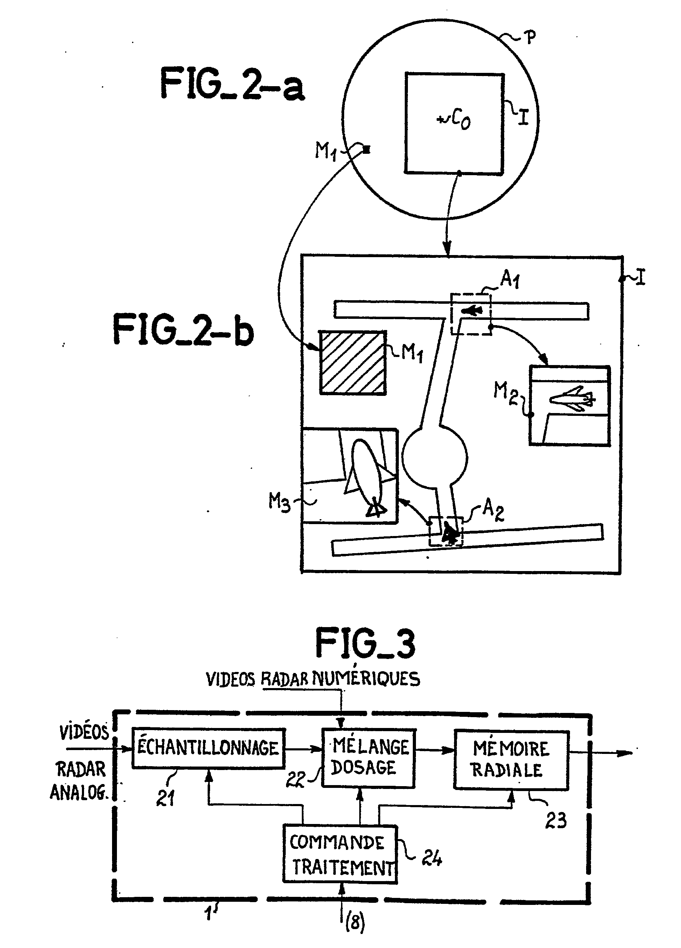

On a représenté sur les figures 2a et 2b un exemple de visualisation d'une zone surveillée à l'aide d'un radar.

Sur la figure 2a, on a figuré par un cercle la portée P d'un radar situé en un point Co, centre du cercle P. Sur la zone P couverte par le radar, une partie seulement est par exemple visualisée sous forme d'une image I, représentée sur la figure 2b. La partie visualisée est par exemple un aéroport comportant pistes et taxiways sur lesquels se déplacent deux avions, A₁ et A₂.

Toujours à titre d'exemple, il est possible d'agrandir les zones de l'image qui entourent les avions A₁ et A₂, pour former respectivement les médaillons M₂ et M₃ venant s'insérer de préférence dans les parties de l'image de base non utiles à l'opérateur. Il est à noter que la surface des zones agrandies et leur grandissement ne sont pas forcément les mêmes d'un médaillon à l'autre. En outre, toujours à titre d'exemple, un médaillon Mi est inséré dans l'image à partir d'une partie de la zone P de couverture du radar qui n'est pas incluse dans la partie I visualisée. La surface et le coefficient de grandissement de ce médaillon M₁ sont également quelconques par rapport à ceux des autres médaillons.

Il est connu de réaliser un tel agrandissement partiel par dilatation, lors de la lecture de la mémoire image, d'une zone de l'image fournie par celle-ci, chacun des points destinés à constituer le médaillon étant alors répété identiquement à lui-même k fois, si k est le coefficient de grandissement recherché; cette méthode est connue sous le nom de "zoom". Elle a l'inconvénient manifeste de ne pas améliorer la définition de la zone observée agrandie et la définition globale du médaillon présenté se trouve donc très inférieure à celle du reste de l'image de base.

L'article intitulé "A digital scan converter for radar pictures" de J. Gietema, paru dans Philips Tele- communications Review de Mai 1979, décrit un transformateur numérique d'image radar muni d'une possibilité de zoom.

La présente invention a pour objet un procédé réalisant le médaillon lors de l'écriture de l'information vidéo en mémoire image, ce qui permet d'augmenter la définition du maillon; la mémoire image contient alors à la fois l'image de base et les médaillons, ces derniers étant mémorisés avec les coordonnées (cartésiennes) et le grandissement désirés. Les coordonnées cartésiennes des points de chaque médaillon sont obtenues par modification des données utilisées pour la conversion de coordonnées de l'image de base, par l'ensemble de conversion 3. Le grandissement désiré est obtenu par modification correspondante de la période d'échantillonnage de l'information vidéo analogique lors de sa conversion en numérique par l'ensemble 1, ce qui permet d'augmenter la définition du médaillon par rapport à l'image de base.

Plus précisément, l'invention a pour objet un procédé tel que défini par la revendication 1 et un transformateur numérique d'images pour la mise en oeuvre de ce procédé, tel que défini par les revendications 8 et 9.

D'autres objets, particularités et résultats de l'invention ressortiront de la description suivante, illustrée par les dessins annexés qui représentent :
- la figure 1, déjà décrite, le schéma synoptique d'un T.D.I. ;
- les figures 2a et 2b, déjà décrites, un exemple d'image de base comportant des médaillons, susceptible d'être visualisée par un T.D.I. ;
- la figure 3, un mode de réalisation d'une partie de la figure 1 ;
- les figures 4 et 5, deux schémas explicatifs de la conversion de coordonnées utilisée pour les médaillons ;
- la figure 6, un mode de réalisation d'une autre partie de la figure 1 .

La figure 3 représente un mode de réalisation de l'ensemble 1 de traitement du signal vidéo radar.

Il comporte un circuit 21 d'échantillonnage du signal vidéo analogique reçu du radar, qui fournit cette vidéo sous forme numérique à un ensemble de circuits 22.

Il est à noter qu'un ensemble tel que 1 peut recevoir plusieurs signaux vidéos d'un radar. L'ensemble 22 reçoit en outre des signaux vidéos numériques issus de ce même radar (données de cartographie par exemple) et assure le mélange et le dosage de toutes ces informations, qu'il transmet ensuite à une mémoire 23 dite mémoire radiale, contenant donc le signal vidéo traité et numérisé, relatif à une radiale.

Dans une variante de réalisation, l'ensemble 1 peut contenir plusieurs mémoires radiales travaillant alternativement.

Ces circuits 21 à 23 fonctionnent sous l'action d'un circuit 24 de commande du traitement, lui-même en relation avec l'ensemble de commande 8 (figure 1).

Selon l'invention, la mémoire image 4 contient donc à la fois l'image de base et les médaillons désirés, avec le grandissement désiré. A cet effet, deux variantes sont prévues.

Selon la première variante, l'ensemble de traitement 1 comporte au moins une mémoire radiale pour les radiales de l'image de base et une mémoire radiale pour chacun des médaillons qu'on désire réaliser (mémoires non représentées sur la figure 3) ; le nombre total de médaillons possible dans une image est donc alors défini par le nombre de mémoires radiales affectées aux médaillons que comporte le système. La mémoire radiale de J'image de base contient le signal vidéo numérisé et traité de façon classique. La mémoire radiale de chaque médaillon contient la partie du signal vidéo concernée par le médaillon, échantillonnée, pour être mémorisée, à une fréquence supérieure à celle de l'image de base, correspondant au grandissement souhaité : par exemple fréquence double pour un grandissement de 2.

Selon la deuxième variante, l'ensemble 1 ne contient qu'une seule mémoire radiale, dans laquelle l'information vidéo est stockée avec le maximum de définition disponible dans le système. Si K est le grandissement maximum souhaité pour un médaillon, les données destinées à former l'image de base seront alors prélevées dans une case par ensemble de K cases de la mémoire radiale (1/K), et les données destinées à former le ou les médaillons seront prélevées à plus grande fréquence : pour un médaillon de grandissement k, fois sur K cases (k.1/K), jusqu'à k = K où on lit toutes les cases mémoire. La fréquence d'échantillonnage (circuit 21) et la définition de l'image de base fixent donc le grandissement maximum (K) possible pour les médaillons.

Par ailleurs, l'ensemble de conversion de coordonnées 3 (figure 1) doit effectuer une conversion classique pour l'image de base et, en outre, une conversion spécifique à chacun des médaillons.

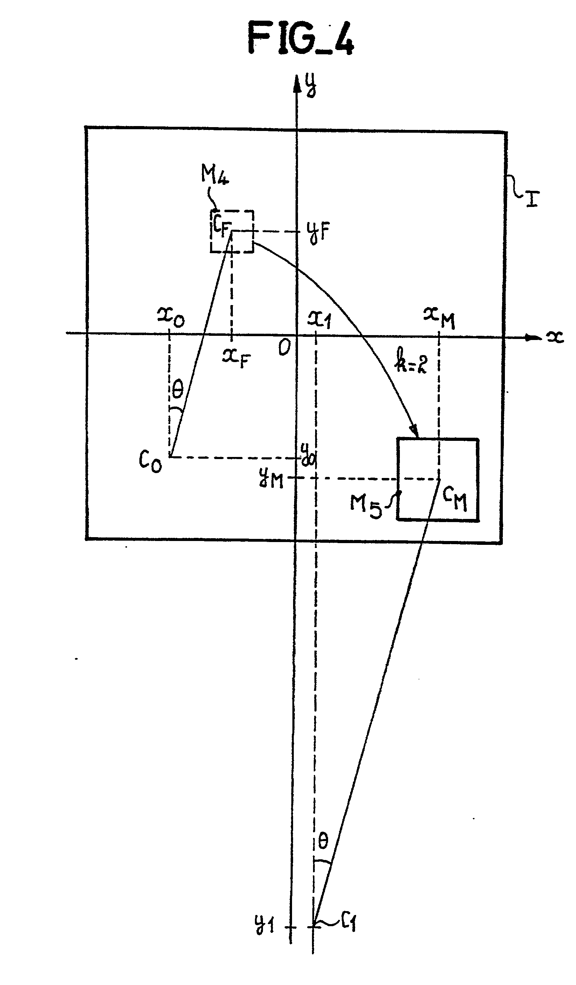

La figure 4 représente une image 1 telle qu'elle est contenue dans la mémoire image et qu'elle apparaîtra sur le moniteur TV.

Sur cette image I, à titre d'exemple, le centre Cₒ du radar (de coordonnées cartésiennes xₒ et yₒ) n'est pas confondu avec le centre O de l'image visualisée I. La zone à agrandir est repérée M₄ ; son centre C_{F} a pour coordonnées cartésiennes x_{F} et y_{F·} La ligne Co C_{F} fait un angle noté e avec l'axe Oy. Cette zone M₄ est destinée à constituer un médaillon Mₛ, dont les coordonnées du centre C_{M} sont respectivement x_{M} et y_{M·} Si on appelle k le coefficient de grandissement du médaillon M₅ et Ci, de coordonnées X₁ et yi, la position qu'occuperait le centre du radar Cₒpour le médaillon M₅, on obtient :

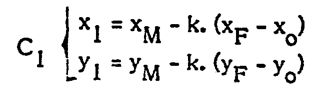

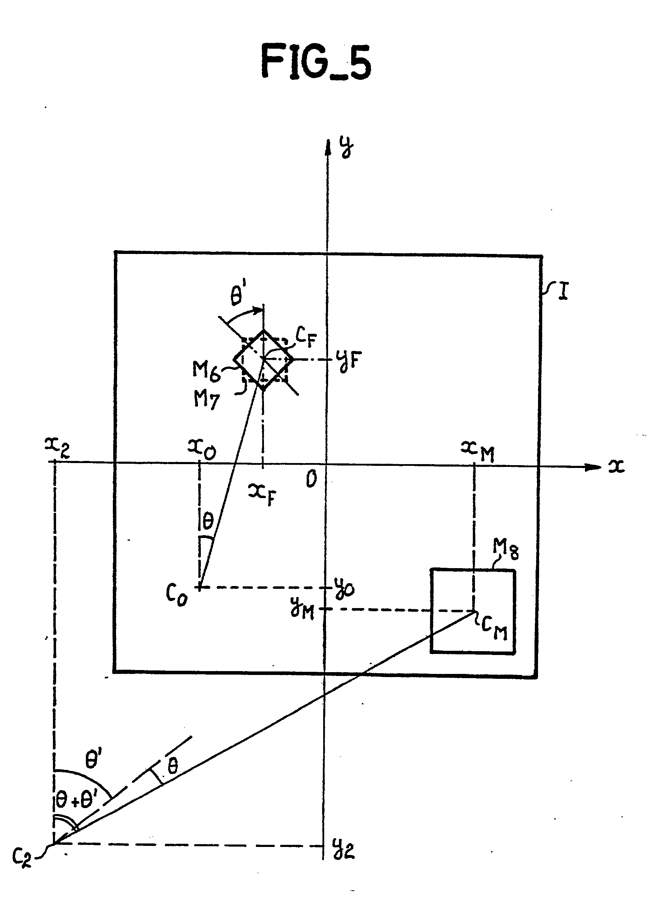

La figure 5 est un schéma analogue à celui de la figure 4, à ceci près que la zone dont on veut réaliser un médaillon subit en outre une rotation d'un angle défini, noté e'.

La figure 5 présente donc par rapport à la figure 4 les modifications suivantes : la zone M₆ dont on veut réaliser un médaillon a, à titre d'exemple, même centre C_{F} et même dimensions (par exemple un carré) que la zone M₄ de la figure 4, mais son axe de symétrie passant par le milieu des côtés fait un angle e' avec l'axe Oy. On souhaite lui faire subir une rotation e' afin d'amener l'axe précité parallèlement à l'axe Oy ; cette zone ayant ainsi subi une rotation e' est représentée en pointillé sur la figure et repérée M₇. Le médaillon correspondant à la zone M₆/M₇ est repéré Ma et a pour centre le point C_{M} comme précédemment. On a désigné par C₂ la position du centre radar Cₒ relativement au médaillon M₈ ; les coordonnées x₂ et y₂ du point C₂ sont données par les formules suivantes : 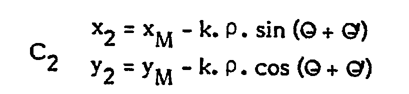 avec

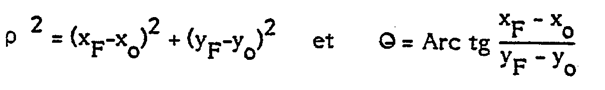

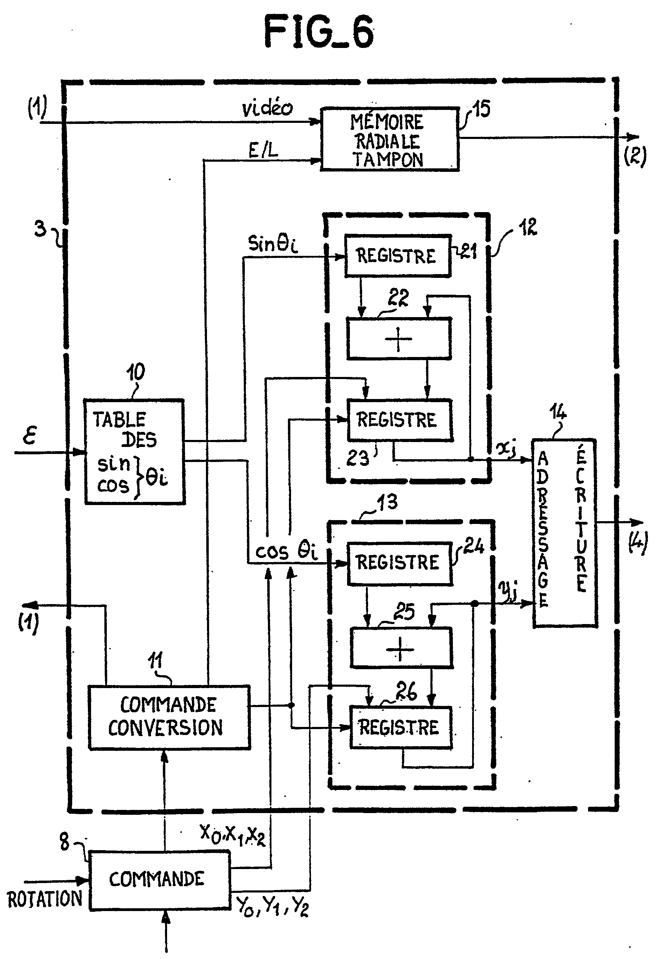

La figure 6 représente un mode de réalisation de l'ensemble de conversion de coordonnées 3 de la figure 1. On a également indiqué sur cette figure 6 l'ensemble de commande 8, qui reçoit de l'opérateur les données concernant le(s) médaillon(s) désiré(s).

L'ensemble de conversion de coordonnées 3 comporte :
- un ensemble 11 de circuits de commande de la conversion, en relation avec l'ensemble de commande 8 ;
- une table 10 des différentes valeurs des fonctions trigonométriques, par exemple sinus et cosinus, de chacun des angles θᵢ (i variant de 1 à n) définissant respectivement les n radiales ; cette table est par exemple constituée par une mémoire, adressée par les incréments d'angle (ε) ;
- un accumulateur 12, recevant de la table précédente (10) la valeur sin θⱼ et de l'ensemble de commande 8 la coordonnée xₒ du centre Cₒ pour l'image de base, xᵢ ou x₂ pour les centres C₁ ou C₂ d'un médaillon ; l'accumulateur 12 est constitué par un additionneur 22 entouré d'un registre d'entrée 21, recevant pour chaque radiale la valeur de sin θᵢ, et d'un registre de sortie 23, qui reçoit la coordonnée initiale de la radiale (xo, X₁ ou x₂) et dont la sortie, d'une part, fournit la coordonnée xj courante le long de la radiale pendant les accumulations et, d'autre part, est dirigée également vers l'additionneur 22 ; l'accumulation est déclenchée par le dispositif de commande de conversion 11 ; à chaque étape de l'accumulation, pour une même valeur de θᵢ donc pour une même radiale, l'accumulateur délivre la coordonnée cartésienne xj = xj- ₁ + sin θᵢ;
- un accumulateur 13 analogue à l'accumulateur 12, c'est-à-dire constitué d'un additionneur 25 entouré d'un registre d'entrée 24 d'un registre de sortie 26, réalisant une accumulation en cosinus et délivrant la coordonnée cartésienne yj = yⱼ₋₁ + cos e; ;
- un dispositif 14 d'adressage en écriture, permettant de sélectionner une adresse en mémoire image 4 où l'information vidéo doit être inscrite.

Dans une variante de réalisation (représentée sur la figure 6), l'ensemble de conversion 3 comporte en outre une mémoire tampon 15, interposée entre la mémoire radiale 23 (de l'ensemble de traitement 1) et l'ensemble de rémanence 2. Dans ce cas, le circuit 11 de commande de conversion commande, dans une première phase, la lecture de la mémoire radiale 23 (avec la définition convenable) et l'écriture de cette information dans la mémoire tampon 15 et, dans une deuxième phase, la lecture de la mémoire tampon 15 à destination de la mémoire image 4 (via les circuits de rémanence 2) en synchronisme avec l'adressage en écriture de cette mémoire 4.

Dans le cas où le nombre de médaillons désirés et la cadence d'arrivée des informations radar à visualiser sont compatibles avec la vitesse d'accumulation de l'ensemble de conversion 3, un seul ensemble d'accumulateurs est suffisant pour assurer les conversions de coordonnées relatives successivement à l'image de base et au(x) médaillon(s). Dans ce cas, selon un mode de réalisation préféré, le fonctionnement du dispositif de la figure 6 se déroule en deux étapes, pour chaque radiale, dont on rappelle qu'elle est caractérisée par un angle e; ( 1≤i≤n ).

Dans une première étape, les accumulateurs 12 et 13 fournissent les coordonnées courantes _{X}j et yj d'une radiale (de la position du radar Co à la périphérie de l'écran) pour l'image de base, à partir des coordonnées xo et yo fournies par l'ensemble de commande 8. En synchronisme (supervisé par l'ensemble 8), l'information vidéo affectée à l'image de base, contenue dans la mémoire radiale 23 (figure 3) ou dans la mémoire tampon 15 (figure 6), s'inscrit en mémoire image (4) aux adresses xj, yj. Toutefois, afin d'éviter toute perturbation du mécanisme de rémanence (ensemble 2, figure 1 l'inscription de l'image de base en mémoire image (4) est empêchée dans la zone (M₅, Mε) de l'image 1 où doit venir s'inscrire le médaillon. Cela est réalisé :
- soit par inhibition du transfert de la vidéo relative à l'image de base en mémoire image c'est-à-dire qu'on n'exploite pas à ce moment là le contenu de la mémoire radiale ou de la mémoire tampon, sous le contrôle des circuits 8 ou 11 ; la conversion de coordonnées est continuée normalement pendant ce temps ;
- soit par non fonctionnement des accumulateurs dans la zone Mₛ ou M₈ en question, sous le contrôle des circuits 8 et 11 ; dans ce dernier cas, il est alors nécessaire de ré-initialiser les accumulateurs (registres 23 et 26) en sortie des zones Ms ou Ma.

Dans une deuxième étape, pour la même radiale et le cas échéant, les accumulateurs 12 et 13 fournissent les coordonnées courantes _{X}j et yj pour le médaillon, à partir des coordonnées xᵢ et yi (ou x₂ et y₂) fournies par l'ensemble de commande 8. Comme précédemment, en synchronisme, le contenu de la mémoire radiale (ou de la mémoire tampon) affectée au médaillon s'inscrit en mémoire image aux adresses xj, yj. Comme précédemment également et de la même manière, il n'y a inscription de l'information relative au médaillon que pour les coordonnées correspondant aux zones M₅ ou Me.

Lorsque la cadence des informations radar ou le nombre de médaillons augmente, on dispose plusieurs ensembles tels que 3 affectés l'un à l'image de base et l'autre (ou les autres) aux différents médaillons. L'ensemble de commande 8 assure alors la commutation entre les différents ensembles travaillant respectivement sur l'image de base et sur les médaillons. Dans ce mode de réalisation, il est alors plus simple de disposer d'une mémoire tampon 15 dans chaque ensemble 3.

Dans le mode de réalisation décrit ci-dessus, la mémoire image 4 contient l'image de base dans laquelle les médaillons sont directement insérés. L'avantage de cette solution est notamment une économie d'espace mémoire ; son inconvénient est de nécessiter une inhibition de l'écriture de l'image de base en mémoire image 4, dans les zones où doit être formé un médaillon.

Dans un autre mode de réalisation, la mémoire image 4 contient à la fois l'image de base complète et le ou les médaillons dans des espaces mémoire supplémentaires. Il est à noter que l'écriture en mémoire image s'effectue ici comme précédemment, par un ou plusieurs ensembles de conversion 3. L'affichage sur moniteur 7 d'une image dans laquelle les médaillons sont insérés à l'endroit désiré est alors réalisé par l'ensemble de lecture 5, sur commande de l'ensemble 8, l'ensemble 5 assurant la lecture de l'information convenable par gestion des adressages lecture de la mémoire image.

La description faite ci-dessus l'a été bien entendu à titre d'exemple non limitatif. C'est ainsi notamment qu'on a décrit une conversion de coordonnées faisant appel aux fonctions trigonométriques sinus et cosinus ; toutefois, ainsi qu'il est connu, cette conversion peut être également réalisée avec la fonction tangente, les mêmes considérations notamment sur la vitesse et le nombre d'accumulateurs restant valables.

## Revendications

1. Procédé d'insertion d'au moins un médaillon de grandissement k prédéfini à une position prédéfinie dans l'image fournie par un transformateur numérique d'image, à partir d'une information vidéo incidente reçue en coordonnées polaires, le procédé comportant, pour fournir une image de base:
- une étape d'affichage par des moyens (7) d'affichage d'une image (I) de type télévision;
- une étape de mémorisation par une mémoire dite mémoire image (4), sous forme numérique, de l'image à afficher sur les moyens d'affichage (7);
- une étape d'échantillonnage et de mémorisation, par des moyens (1) de traitement comportant des moyens de mémorisation (23), de l'information vidéo au fur et à mesure de sa réception par le transformateur;
- une étape de conversion, par des moyens (3) de conversion de coordonnées, de l'information incidente en coordonnées polaires en une information en corrdonnées cartésiennes;
ledit procédé étant caractérisé par le fait que l'information vidéo relative à la zone (M₄, Me) de l'image de base devant constituer le médaillon (M₅, Ma) est échantillonnée et mémorisée par les moyens de traitement (1) avec une définition supérieure à la définition de l'image de base et qui est fonction du grandissement k prédéfini pour le médaillon par rapport à l'image de base; que la conversion de coordonnées réalisée par les moyens de conversion (3) est effectuée, pour l'information vidéo relative à la zone de l'image devant constituer le médaillon, avec des paramètres fonctions de la position prédéfinie du médaillon dans l'image et du grandissement k du médaillon, et que la mémoire image (4) reçoit des moyens de traitement les informations vidéo échantillonnées relatives à la fois à l'image de base et au médaillon, ces dernières étant mémorisées avec ledit grandissement prédéfini et avec les coordonnées cartésiennes correspondant à ladite position prédéfinie.

2. Procédé selon la revendication 1, caractérisé par le fait que le procédé est modifié de sorte que les informations vidéo incidentes relatives à l'image de base et à la zone de base devant constituer le médaillon sont échantillonnées et mémorisées (23) par les moyens de traitement (1) avec une définition fonction du grandissement maximum K souhaité pour le médaillon, et que le transfert en mémoire image (49) de l'information mémorisée par les moyens de traitement (1) se fait à la fréquence 1/K pour l'image hors médaillon et k/K pour la zone de l'image de base devant constituer le médaillon.

3. Procédé selon l'une des revendications précédentes, caractérisé par le fait que la mémoire image (4) contient à la fois le médaillon et la totalité de l'image de base, y compris la zone (Ms, Ms) où doit être formé le médaillon, et que le médaillon est inséré dans l'image de base, lors de la lecture de la mémoire image à destination des moyens d'affichage (7).

4. Procédé selon l'une des revendications 1 ou 2, caractérisé par le fait que la mémoire image (4) contient l'image hors médaillon dans laquelle sont insérés les médaillons, et que l'écriture en mémoire image des zones de l'image de base où doit être formé un médaillon est inhibée.

5. Procédé selon la revendication 4, caractérisé par le fait que l'inhibition est réalisée par non transmission à la mémoire image desdites zones.

6. Procédé selon la revendication 4, caractérisé par le fait que l'inhibition est réalisée par non conversion des coordonnées desdites zones.

7. Procédé selon l'une des revendications précédentes, caractérisé par le fait que, pour faire subir à la partie (M₄, Mₑ) de l'image devant constituer un médaillon (Mₛ, Ma) une rotation d'un angle prédéfinie (e'), la conversion de coordonnées est effectuée pour la zone de l'image de base devant constituer le médaillon avec des paramètres fonction en outre dudit angle prédéfini (₈').

8. Transformateur numérique d'image pour la mise en oeuvre du procédé selon l'une des revendications précédentes, comportant:
- des moyens (7) d'affichage d'une image (I) de type télévision;
- une mémoire dite mémoire image (4), contenant sous forme numérique l'image à afficher sur les moyens d'affichage (7);
- des moyens (1) de traitement comportant des moyens d'échantillonnage (21) et des moyens de mémorisation (23) de l'information vidéo au fur et à mesure de sa réception par le transformateur;
- des moyens (3) de conversion de coordonnées, convertissant l'information incidente en coordonnées polaires en une information en coordonnées cartésiennes;
le transformateur étant caractérisé par le fait que les moyens de mémorisation des moyens de traitement comportent une mémoire affectée à l'image de base et au moins une mémoire affectée à un médaillon, cette dernière recevant et mémorisant les informations vidéo incidentes relatives à la zone de l'image de base devant constituer le médaillon, échantillonnées avec une définition fonction du grandissement k du médaillon.

9. Transformateur numérique d'image pour la mise en oeuvre du procédé selon l'une des revendications précédentes, comportant:
- des moyens (7) d'affichage d'une image (I) de type télévision;
- une mémoire dite mémoire image (4), contenant sous forme numérique l'image à afficher sur les moyens d'affichage (7);
- des moyens (1) de traitement comportant des moyens d'échantillonnage (21) et des moyens de mémorisation (23) de l'information vidéo au fur et à mesure de sa réception par le transformateur;
- des moyens (3) de conversion de coordonnées, convertissant l'information incidente en coordonnées polaires en une information en coordonnées cartésiennes;
le transfert étant caractérisé par le fait que les moyens d'échantillonnage des moyens de traitement sont agencés pour assurer l'échantillonnage des informations vidéo incidentes avec une définition fonction du grandissement maximum K souhaité pour le médaillon; que les moyens de mémorisation assurent la mémorisation de ces informations échantillonnée dans une mémoire, et que les moyens de traitement sont agencés pour assurer le transfert de l'information ainsi mémorisée à la fréquence 1/K pour l'image hors médaillon et k/K pour la zone de l'image devant constituer le médaillon.

10. Transformateur selon l'une des revendications 8 ou 9, caractérisé par le fait que les moyens de conversion (3) comportent une mémoire tampon (15) recevant le contenu des moyens de mémorisation (23) des moyens de traitement (1) et le transmettent à la mémoire image (4).

11. Transformateur selon la revendication 10, caractérisé par le fait qu'il comporte une pluralité de moyens de conversion (3), le premier d'entre eux étant affecté à la conversion de coordonnées relatives à l'image de base et au moins un deuxième étant affecté à au moins un médaillon, la mémoire tampon (15) de chacun des moyens de conversion (3) recevant des moyens de mémorisation (23) des moyens de traitement (1) la part de l'information vidéo qui le concerne.

## Patentansprüche

1. A method of inserting at least one patch having a predefined magnification k at a predefined position in the image supplied by a digital image transforming device, starting from incident video information received in polar coordinates, the said method comprising, in order to supply a base image, the following steps:
- a display step which consists in displaying a television-type image (I) by means of a display means (7);
- a storing step which consists in storing in a digital form the image to be displayed on the display means (7) in a memory termed image memory;
- a sampling and storing step which consists in sampling and storing the video information in step with its reception by the transforming device by means of processing means (1) comprising storing means (23);
- a conversion step which consists in converting the information which is incident in polar coordinates into information in cartesian coordinates, by means of a coordinate conversion means;
the said method being characterized in that the video information relative to the zone (M₄ and Ms) of the base image, which is to constitute the patch (Ms and Ms), is sampled and stored by the processing means (1) with a definition greater that the base image definition and which is a function of the predefined magnification k for the path in relation to the base image; in that the conversion of coordinates effected by the conversion means (3) is performed, for the video information relative to the image zone which is to constitute the patch, with parameters which are functions of the predefined position of the patch in the image and of the magnification k of the patch, and in that the image memory (4) receives from the processing means the sampled video information relative both to the base image and to the patch, the latter being stored with the said predefined magnification and with the cartesian coordinates corresponding to the said predefined position.

2. The method as claimed in claim 1, characterized in that the method is modified in such a way that the incident video information relative to the base image and to the base zone which is to constitute the patch are sampled and stored (23) by the processing means (1) with a definition which is a function of the maximum magnification K desired for the patch, and in that the transfer to the image memory (4) of the information stored by the processing means (1) is performed at the frequency 1/K for the image outside the patch and k/K for the zone of the base image which is to constitute the patch.

3. The method as claimed in any one of the preceding claims, characterized in that the image memory (4) simultaneously contains the patch and the totality of the base image, including the zone (Ms and M₆) where the patch is to be formed, and in that the patch is inserted, in the base image at the time of reading of the image memory at the destination of the display means (7).

4. The method as claimed in claim 1 or claim 2, characterized in that the image memory (4) contains the image outside of the patch in which the patches are inserted, and in that the storing in the image memory zones of the base image, where a patch is to be formed, is inhibited.

5. The method as claimed in claim 4, characterized in that the inhibition is performed by non-transmission of the said zones to the image memory.

6. The method as claimed in claim 4, characterized in that the inhibition is performed by non-conversion of the coordinates of the said zones.

7. The method as claimed in any one of the preceding claims, characterized in that in order to cause the part (M₄ and M₆) of the image, which is to constitute a patch (Ms and Me), to undergo rotation with a predefined angle (e'), the conversion of the coordinates is performed for the base image zone, which is to constitute the patch, with parameters which are furthermore a function of the said predefined angle (e_{'}).

8. A digital image transforming device for performing the method as claimed in any one of the preceding claims, comprising:
- means (7) for the display of a television-type image (I);
- a memory termed the image memory (4) containing, in a digital form, the image to be displayed on the display means (7);
- processing means (1) comprising sampling means (21) and means (23) for storing the video information in step with its reception by the transforming device;
- coordinate conversion means (3) for converting the information incident in polar coordinates into information in cartesian coordinates;
the transforming device being characterized in that the storing means of the processing means comprise a memory allocated to the base image and at least one memory allocated to a patch, the latter receiving and storing the incident video information relative to the zone of the base image which is to constitute the patch, sampled with a definition which is a function of the magnification k of the patch.

9. An image transforming device for performing the method as claimed in any one of the preceding claims, comprising:
- means (7) for the display of a television-type image (1);
- a memory termed the image memory (4) containing, in a digital form, the image to be displayed on the display means (7);
- processing means (1) comprising sampling means (21) and means (23) for storing the video information in step with its reception by the transforming device;
- coordinate conversion means (3) for converting the information incident in polar coordinates into information in cartesian coordinates;
the transforming device being characterized in that the sampling means of the processing means are arranged in order to ensure the sampling of the incident video information with a definition which is a function of the maximum magnification K desired for the patch; in that the storing means ensure the storing of such sampled information in a memory, and in that the processing means are arranged in order to ensure the transfer of the information so stored at the frequency 1/K for the image outside the patch and k/K for the zone of the image which is to constitute the patch.

10. The transforming device as claimed in claim 8 or claim 9, characterized in that the conversion means (3) comprise a buffer memory (15) receiving the content of the storing means (23) of the processing means (1) and transferring the same to the image memory (4).

11. The transforming device as claimed in claim 10, characterized in that it comprises a plurality of conversion means (3), the first of same being assigned to the conversion of the coordinates relative to the base image and at least a second one thereof being assigned to one patch at least, the buffer memory (15) of each of the conversion means (3) receiving, from the storing means (23) of the processing means (1), the part of the video information relative thereto.

## Claims

1. Verfahren zur Einfügung wenigstens eines Vergröβerungsfeldes der vorbestimmten Vergröβe- rung k an einer vorbestimmten Position in dem von einem digitalen Bildtransformator gelieferten Bild, ausgehend von einer in Polarkoordinaten ankommenden Videoinformation, wobei das Verfahren, um ein Basisbild zu liefern, umfaBt:
- eine Phase des Anzeigens eines Bildes (I) vom Fernsehtyp mittels Anzeigemitteln (7);
- eine Phase des Speicherns des auf den Anzeigemitteln (7) anzuzeigenden Bildes mittels eines als Bildspeicher bezeichneten Speichers (4) in digitaler Form;
- eine Phase des Abtastens und der Speicherung der Videoinformation in dem MaBe, wie sie von dem Transformator empfangen wird, mittels Verarbeitungsmitteln (1), die Speichermittel (23) umfassen;
- eine Phase, bei der die in Polarkoordinaten ankommende Information in eine Information in kartesischen Koordinaten mittels Mitteln (3) zur Umsetzung der Koordinaten umgesetzt wird;
wobei das genannte Verfahren dadurch gekennzeichnet ist, daB die Videoinformation, die die Zone (M4, Mₑ) des Basisbildes betrifft, welches das Vergröβerungsfeld (Mₛ, Me) bilden soll, durch die Verarbeitungsmittel (1) abgetastet und mit einer Auflösung gespeichert wird, die gröβer als die Auflösung des Basisbildes ist und von der vorbestimmten Vegröβerung k fur das Vergröβerungsfeld in bezug auf das Basisbild abhangig ist; daB die durch die Umsetzungsmittel (3) durchgefuhrte Umsetzung der Koordinaten fur die Videoinformation, die die Zone des Bildes betrifft, welches das Vergröβerungsfeld bilden soll, mit Parametern durchgefuhrt wird, die von der vorbestimmten Position des Vergröβerungsfeldes in dem Bild und von der VergroBerung k des Vergröβerungsfeldes abhangig sind, und daB der Bildspeicher (4) aus den Verarbeitungsmitteln die abgetasteten Videoinformationen empfängt. die sowohl das Basisbild als auch das Vergröβerungsfeld betreffen, wobei diese mit der vorbestimmten Vergröβerung und mit den kartesischen Koordinaten, die der genannten vorbestimmten Position entsprechen, gespeichert werden.

2. Verfahren nach Anspruch 1, dadurch gekennzeichnet, daB das Verfahren so verändert wird, daB die ankommenden Videoinformationen, die das Basisbild sowie die Basiszone betreffen, welche das Ver- gröβerungsfeld bilden sollen, durch die Verarbeitungsmittel (1) mit einer Auflösung abgetastet und gespeichert werden, die von der fur das Vergröβerungsfeld gewünschten, maximalen Vergröβerung K ab- hängig ist, und daB die Überführung der von den Verarbeitungsmitteln (1) gespeicherten Information in den Bildspeicher-(4) bei der Frequenz 1/K fur das Bild auBerhalb des Vergröβerungsfeldes und bei der Frequenz k/K fur die Zone des Basisbildes, die das Vergröβerungsfeld bilden soll, erfolgt.

3. Verfahren nach einem der vorstehenden Ansprüche, dadurch gekennzeichnet, daB der Bildspeicher (4) sowohl das Vergr6Berungsfeld als auch die Gesamtheit des Basisbildes, die Zone (Ms, Me) in- begriffen, in welcher das Vergröβerungsfeld gebildet werden muB, enthält, und daB das Vergr6Berungs- feld während des Auslesens aus dem Bildspeicher zu den Anzeigemitteln (7) hin in das Basisbild eingefügt wird.

4. Verfahren nach Anspruch 1 oder 2, dadurch gekennzeichnet, daB der Bildspeicher (4) das auBerhalb des Vergröβerungsfeldes liegende Bild, in welchem die Vergröβerungsfelder eingefügt sind, ent- halt und daB das Einschreiben der Zonen des Basisbildes, in welchen ein Vergröβerungsfeld gebildet werden soll, in den Bildspeicher unterdrückt wird.

5. Verfahren nach Anspruch 4, dadurch gekennzeichnet, daB die Unterdrückung durch Nicht-Über- tragung der genannten Zonen zu dem Bildspeicher erfolgt.

6. Verfahren nach Anspruch 4, dadurch gekennzeichnet, daB die Unterdrückung durch Nicht-Umsetzung der Koordinaten der genannten Zonen erfolgt.

7. Verfahren nach einem der vorstehenden Ansprüche, dadurch gekennzeichnet, daB, um dem Teil (M₄, M₆) des Bildes, das ein Vergröβerungsfeld (Ms, Mₑ) bilden soll, eine Drehung um einen vorbestimmten Winkel (o') zu verleihen, die Umsetzung der Koordinaten fur die Zone des Basisbildes, das das Vergröβerungsfeld bilden soll, mit Parametern erfolgt, die ferner von dem vorbestimmten Winkel (₈') ab- hängig sind.

8. Digitaler Bildtransformator fur die Durchführung des Verfahrens nach einem der vorstehenden Ansprüche, welcher umfaBt:
- Mittel (7) zum Anzeigen eines Bildes (I) vom Fernsehtyp;
- einen als Bildspeicher bezeichneten Speicher (4), der in digitaler Form das auf den Anzeigemitteln (7) anzuzeigende Bild enthält;
- Verarbeitungsmittel (1), die Mittel (21) zum Abtasten sowie Mittel (23) zum Speichern der Videoinformation in dem MaBe umfassen, wie sie von dem Transformator empfangen wird;
- Mittel (3) zur Umsetzung von Koordinaten, die die in Polarkoordinaten ankommende Information in ei- ne Information in kartesischen Koordinaten umsetzen;
wobei der Transformator dadurch gekennzeichnet ist, daB die Speichermittel der Verarbeitungsmittel einen Speicher, der dem Basisbild zugewiesen ist, sowie wenigstens einen Speicher, der einem Vergrö-βerungsfeld zugewiesen ist, umfassen, wobei dieser die ankommenden Videoinformationen empfangt und speichert, welche die Zone des Basisbildes, das das Vergröβerungsfeld bilden soll, betreffen, wobei diese Informationen mit einer Auflösung, die von der Vergröβerung k des Vergröβerungsfeldes ab- hängig ist, abgetastet werden.

9. Digitaler Bildtransformator für die Durchführung des Verfahrens nach einem der vorstehenden Ansprüche, welcher umfaBt:
Mittel (7) zum Anzeigen eines Bildes (I) vom Fernsehtyp;
- einen als Bildspeicher bezeichneten Speicher (4), der in digitaler Form das auf den Anzeigemittein (7) anzuzeigende Bild enthält;
Verarbeitungsmittel (1), die Mittel (21) zum Abtasten sowie Mittel (23) zum Speichern der Videoinformation in dem MaBe, wie sie von dem Transformator empfangen wird, umfassen;
- Mittel (3) zum Umsetzen der Koordinaten, die die in Polarkoordinaten ankommende Information in ei- ne Information in kartesischen Koordinaten umsetzen;
wobei der Transformator dadurch gekennzeichnet ist, daB die Abtastmittel der Verarbeitungsmittel so angeordnet sind, daB sie die Abtastung der ankommenden Videoinformationen mit einer Auflosung zu gewährleisten, die von der gewunschten, maximalen Vergröβerung K für das Vergröβerungsfeld abhangig ist; daB die Speichermittel die Speicherung dieser in einem Speicher abgetasteten Informationen gewahr- leisten und daB die Verarbeitungsmittel so angeordnet sind, daB sie die Überführung der so gespeicherten Informationen mit der Frequenz 1/K fur das Bild auBerhalb des Vergröβerungsfeldes und k/K für die Zone des Bildes, das das Vergröβerungsfeld bilden soll, gewährleisten.

10. Transformator nach einem der Ansprüche 8 oder 9, dadurch gekennzeichnet, daB die Umsetzungsmittel (3) einen Puffer-Speicher (15) umfassen, der den Inhalt der Speichermittel (23) der Verarbeitungsmittel (1) empfängt und ihn zu dem Bildspeicher (4) überträgt.

11. Transformator nach Anspruch 10, dadurch gekennzeichnet, daB er eine Mehrzahl von Umset- zungsmitteln (3) umfaBt, wovon das erste unter ihnen der Umsetzung von Koordinaten, die das Basisbild betreffen, zugewiesen ist, und wovon wenigstens ein zweites Mittel wenigstens einem Vergröβerungs- feld zugewiesen ist, wobei der Puffer-Speicher (15) jedes der Umsetzungsmittel (3) von den Speichermit- teln (23) der Verarbeitungsmittel (1) den Tell der Videoinformation, den es betrifft, empfängt.
